(19) Europäisches Patentamt
European Patent Office
Office européen des brevets

(11) **EP 3 160 077 B1**

(12) **EUROPEAN PATENT SPECIFICATION**

(45) Date of publication and mention
of the grant of the patent:
**18.12.2019 Bulletin 2019/51**

(51) Int Cl.:
***H04L 7/033*** *(2006.01)*

(21) Application number: **16175300.9**

(22) Date of filing: **20.06.2016**

(54) **CLOCK RECOVERY APPARATUS AND CLOCK RECOVERY METHOD**

TAKTRÜCKGEWINNUNGSVORRICHTUNG UND VERFAHREN ZUR TAKTRÜCKGEWINNUNG

APPAREIL DE RÉCUPÉRATION D'HORLOGE ET PROCÉDÉ DE RÉCUPÉRATION D'HORLOGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2015 CN 201510686140**

(43) Date of publication of application:
**26.04.2017 Bulletin 2017/17**

(73) Proprietor: **ALi Corporation
Hsinchu City 300 (TW)**

(72) Inventor: **Li, Lin
Shanghai (CN)**

(74) Representative: **2K Patentanwälte Blasberg
Kewitz & Reichel
Partnerschaft mbB
Schumannstrasse 27
60325 Frankfurt am Main (DE)**

(56) References cited:
**EP-A2- 1 063 809      US-A1- 2004 247 049
US-A1- 2005 232 383    US-A1- 2006 140 321
US-A1- 2008 310 569    US-A1- 2012 269 308
US-A1- 2013 169 328**

**Description**

**BACKGROUND OF THE INVENTION**

[Field of the Invention]

The invention relates to a clock synchronization circuit and more particularly relates to a clock recovery apparatus and a clock recovery method.

[Description of Related Art]

With the development of technology, the Internet has become a necessary configuration for exchanging information. Among various network configurations, Ethernet has characteristics such as easily accessible, easy to build, fast transmission, and so on, which contribute to the thriving development of Ethernet-related equipment, and the transmission rate thereof also increases from 10Mbps to 100Mbps or even 1Gbps. In order to satisfy the growing demand for packet switching network, Ethernet is constantly evolving. For example, Gigabit Ethernet is defined in the IEEE 802.3 standard. The 1000Base-T standard is one standard protocol that is applied to a coaxial cable and defined in IEEE 802.3ab. It can be foreseen that as the data transmission speed increases, the requirement for clock synchronization and clock accuracy at the receiving end and the transmitting end will get stricter as well.

US 2006/140321 A1 discloses a processor-controlled clock-data recovery (CDR) system. Phase error signals having either a first state or a second state are generated within the CDR system according to whether a first clock signal leads or lags transitions of a data signal. A difference value is generated based on the phase error signals, the difference value indicating a difference between the number of the phase error signals having the first state and a number of the phase error signals having the second state. The difference value is transferred to a processor which is programmed to determine whether the difference value exceeds a first threshold and, if so, to adjust the phase of the first clock signal.

US 2005 232383 discloses a timing recovery method enables interpolation of PAM signals sampled at baud rate. The method exploits the structure of the PAM signal and also the smoothness of the channel pulse response. The resulting interpolator is an adaptive linear filter; and its taps can be adapted with the LMS algorithm. Using this interpolator enables a user to significantly reduce the complexity of the analog clock control circuit.

EP1063809 (A2) discloses a high-speed data receiving circuit allowing correct and reliable data reception without the need for adjusting delays in circuits and interconnections is disclosed. A sampling circuit samples received data according to first, second, and third clock signals to produce first, second, and third streams of data. The first, second, and third clock signals sequentially have a predetermined phase difference between adjacent ones. A clock generator generates the first, second, and third clock signals having phases determined depending on a clock selection signal obtained by comparing the first, second, and third streams of data. The second clock signal is selected as an output clock signal and the second stream of data corresponding to said second clock signal is selected as an output data of the high-speed data receiving circuit.

US2013169328 shows an apparatus including an integration circuit that integrates values of one of a data center and a data edge of input data, based on clock signals, a sampling circuit that samples another at the data center and a data edge of the input data, based on clock signals, a first determination circuit that determines a data value of an integration value of the integration circuit, a second determination circuit that determines a data value of a sampling value of the sampling circuit, a phase detection circuit that detects phase information of the input data, based on a data value determined by the first determination circuit and the second determination circuit, and a phase adjusting circuit that adjusts a phase of a reference clock so as to track a phase of the input data, in accordance with the phase information, so as to output as the clock signals. US2008310569 A1 discloses a SERDES circuit including a clock and data recovery circuit that allows operational margin in temporal and voltage directions to be measured, using a phase offset signal and a threshold voltage control signal, a pre-emphasis driver circuit and an equalizer circuit in order to reduce ISI on a transmission line, and an optimization control circuit for controlling the overall circuit. The optimization control circuit controls an equalizer control signal that is for adjusting characteristics of the equalizer circuit and a driver control signal that is for adjusting characteristics of the pre-emphasis driver circuit and sets the equalizer control signal and driver control signal so that the operational margin of the clock and data recovery circuit is maximized.

Furthermore, in the network physical layer (PHY) of Ethernet equipment, in order to ensure the accuracy of the data recovered by the receiving end circuit, ideally the sampling clock generated by the phase locked loop (PLL) of the transmitting end and the sampling clock generated by the phase locked loop (PLL) of the receiving end should have the same frequency, so that the receiving end can correctly recover the data transmitted by the transmitting end. However, frequency offset may exist in the local oscillation by which the receiving end or the transmitting end generates the sampling clock. Consequently, the sampling clocks of the receiving end and the transmitting end may not be synchronized. Thus, a clock recovery apparatus is provided in the network physical layer (PHY) for correcting the non-synchronization caused by the phase offset, so that the sampling clocks of the receiving end and the transmitting end can be synchronized. The conventional clock recovery apparatus locks the output phase of PLL by collecting statistics regarding variation of phase difference in the statistical window with a fixed length. In long-term transmission or an operating environment with greater phase offset, however, the statistical properties generated by the loop filter of the conventional clock recovery apparatus may not be obvious enough to serve as the reference for locking the output phase of PLL. In particular, it is very inflexible to use the statistical window with a fixed length to estimate the unpredictable phase offset. It is possible that the output phase of PLL may not be adjusted in time if the phase offset is excessively large and the statistical window is excessively long.

## SUMMARY OF THE INVENTION

The invention provides a clock recovery apparatus and a clock recovery method, which more accurately synchronize the sampling clocks of the receiving and transmitting ends to reduce the packet error rate and improve performance of the Ethernet physical layer according to the claims.

The invention provides a clock recovery apparatus according to the claims, which includes an analog-to-digital converter, a multi-phase clock generating circuit, and a clock recovery circuit. The analog-to-digital converter samples an analog input signal by a sampling clock to output a digital input signal. The multi-phase clock generating circuit is coupled to the analog-to-digital converter, and outputs the sampling clock to the analog-to-digital converter and controls a phase of the sampling clock according to a phase selection signal. The clock recovery circuit is coupled to the analog-to-digital converter and the multi-phase clock generating circuit and receives the digital input signal. During a first period, the clock recovery circuit detects a phase shift of the digital input signal to generate the phase selection signal and estimates a phase-offset parameter according to the digital input signal. During a second period, the clock recovery circuit generates the phase selection signal according to the phase-offset parameter generated in the first period and the phase shift of the digital input signal.

In an embodiment of the invention, the clock recovery circuit includes a phase detector, a loop filter, a phase-offset estimator, and a phase adjusting circuit. The phase detector is coupled to the analog-to-digital converter and the multi-phase clock generating circuit and performs phase detection on the digital input signal to generate a phase indication signal indicating the phase shift of the digital input signal. The loop filter is coupled to the phase detector and filters the phase indication signal to generate a phase control signal. The phase-offset estimator is coupled to the loop filter and estimates the phase-offset parameter and a phase adjustment direction in the first period by counting a pulse number of the phase control signal in an estimation window. The phase adjusting circuit is coupled to the loop filter and the phase-offset estimator and outputs the phase selection signal.

In an embodiment of the invention, the phase-offset estimator generates an automatic adjustment signal according to the phase-offset parameter and the phase adjustment direction in the second period, and the phase adjusting circuit generates the phase selection signal according to the automatic adjustment signal and the phase control signal in the second period.

In an embodiment of the invention, the phase adjusting circuit generates the phase selection signal according to the phase control signal in the first period.

In an embodiment of the invention, the phase-offset estimator includes a numerically controlled oscillator established based on the phase-offset parameter, and the numerically controlled oscillator initializes an accumulated result. The numerically controlled oscillator periodically accumulates the phase-offset parameter to the accumulated result. When the accumulated result is greater than a predetermined phase difference, the numerically controlled oscillator controls the automatic adjustment signal to provide a pulse according to the phase adjustment direction.

In an embodiment of the invention, the multi-phase clock generating circuit generates a plurality of clock signals and selects one of the clock signals to serve as the sampling clock according to the phase selection signal. The clock signals have the same frequency and different phases.

From another aspect, the invention provides a clock recovery method, which includes the following. An analog input signal is received and the analog input signal is sampled according to a sampling clock to generate a digital input signal. In a first period, a phase shift of the digital input signal is detected to generate a phase selection signal so as to determine a phase of the sampling clock according to the phase selection signal. In the first period, a phase-offset parameter is estimated according to the digital input signal. In a second period, the phase selection signal is generated according to the phase-offset parameter generated in the first period and the phase shift of the digital input signal, so as to determine the phase of the sampling clock according to the phase selection signal.

Based on the above, the clock recovery apparatus of the invention is further provided with the phase-offset estimator, which counts the number of times of phase adjustments in the first period, so as to estimate the phase-offset parameter. In the second period, the phase-offset estimator may establish the numerically controlled oscillator by using the phase-offset parameter, so as to predict whether the current phase shift exceeds the predetermined phase difference according to the phase-offset parameter. If the phase-offset estimator predicts that the current phase shift has exceeded the predetermined phase difference, the phase-offset estimator may control the multi-phase clock generating circuit to automatically adjust the phase of the sampling clock accordingly, so as to synchronize the sampling clocks of the receiving and transmitting ends in the Ethernet network.

To make the aforementioned and other features and advantages of the invention more comprehensible, several embodiments accompanied with drawings are described in detail as follows.

**BRIEF DESCRIPTION OF THE DRAWINGS**

FIG. 1 is a block diagram illustrating the clock recovery apparatus according to an embodiment of the invention.

FIG. 2 is a flowchart illustrating the clock recovery method according to an embodiment of the invention.

FIG. 3 is a block diagram illustrating the clock recovery apparatus according to an embodiment of the invention.

FIG. 4 is a block diagram illustrating the clock recovery circuit according to an embodiment of the invention.

FIG. 5 is a flowchart of the numerically controlled oscillator generating the automatic adjustment signal according to an embodiment of the invention.

FIG. 6 is a signal timing diagram of the clock recovery circuit according to an embodiment of the invention.

**DESCRIPTION OF THE EMBODIMENTS**

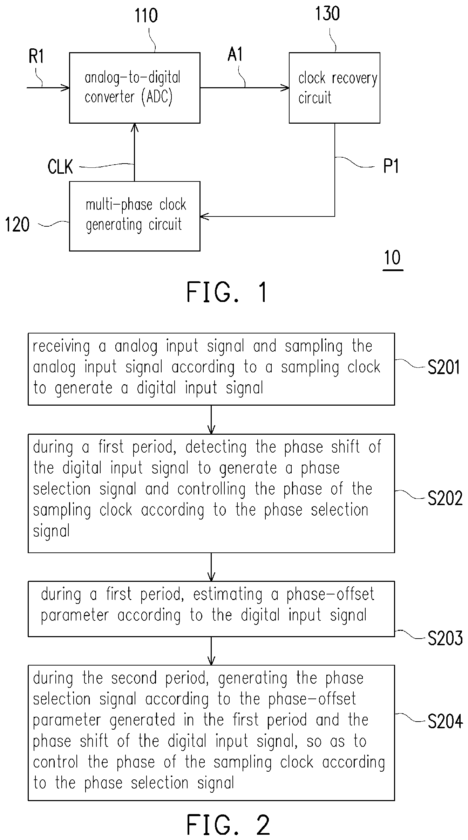

FIG. 1 is a block diagram illustrating a clock recovery apparatus 10 according to an embodiment of the invention. The clock recovery apparatus 10 is configured for generating a clock required by an Ethernet physical layer and for synchronizing clocks of receiving and transmitting ends, and may be disposed in an Ethernet transceiver of 1000Base-T, for example. Nevertheless, the invention is not limited thereto. The clock recovery apparatus 10 includes an analog-to-digital converter (ADC) 110, a multi-phase clock generating circuit 120, and a clock recovery circuit 130. The analog-to-digital converter 110 samples an analog input signal R1 according to a sampling clock CLK and outputs a digital input signal A1. Specifically, the analog-to-digital converter 110 of the clock recovery apparatus 10 may receive the analog input signal R1 transmitted by a coaxial cable or twisted pair via an Ethernet interface, and perform digital-analog conversion on the analog input signal R1 to output the digital input signal A1.

The multi-phase clock generating circuit 120 is coupled to the analog-to-digital converter 110, and outputs the sampling clock CLK to the analog-to-digital converter 110 and controls a phase of the sampling clock CLK according to a phase selection signal P1. In an embodiment, the multi-phase clock generating circuit 120 may generate a plurality of clock signals and output one of the clock signals as the sampling clock CLK according to the phase selection signal P1. The clock signals are provided with the same frequency but different phases. For example, the multi-phase clock generating circuit 120 may be a 128-phase clock generator, which may generate a plurality of clock signals corresponding to 128 phases and output one of the 128 clock signals as the sampling clock CLK according to the phase selection signal P1. To be more specific, the multi-phase clock generating circuit 120 may advance or retard the outputted sampling clock CLK by one phase in response to a pulse of the phase selection signal P1.

The clock recovery circuit 130 is coupled to the analog-to-digital converter 110 and the multi-phase clock generating circuit 120 and receives the digital input signal A1. During a first period, in an embodiment, the clock recovery circuit 130 detects a phase shift of the digital input signal A1 to generate the phase selection signal PI, and estimates a phase-offset parameter according to a statistical result of the phase shift of the digital input signal A1. Specifically, the phase shift of the digital input signal A1 results from a frequency difference between the sampling clock CLK and a working clock of the transmitting end that outputs the analog input signal R1. Then, during a second period, the clock recovery circuit 130 generates the phase selection signal P1 according to the phase-offset parameter generated in the first period and the phase shift of the digital input signal A1. That is, the clock recovery apparatus 10 may estimate a phase-offset state between the working clock of the transmitting end that outputs the analog input signal R1 and the sampling clock CLK in advance in the first period. Accordingly, the clock recovery apparatus 10 may automatically adjust the output phase of the multi-phase clock generating circuit 120 according to the estimated phase-offset parameter in the second period and simultaneously correct the residual phase-offset according to the phase shift state of the digital input signal A1.

FIG. 2 is a flowchart illustrating a clock recovery method according to an embodiment of the invention. In this embodiment, the clock recovery method may be applied to the clock recovery apparatus 10 of FIG. 1, but the invention is not limited thereto.

Referring to FIG. 2, in Step S201, the analog-to-digital converter 110 receives the analog input signal R1 and samples the analog input signal R1 according to the sampling clock CLK to generate the digital input signal A1. In Step S202, during the first period, the clock recovery circuit 130 detects the phase shift of the digital input signal A1 to generate the phase selection signal PI, and the multi-phase clock generating circuit 120 determines the phase of the sampling clock CLK according to the phase selection signal P1. In Step S203, during the first period, the clock recovery circuit 130 estimates the phase-offset parameter according to the digital input signal A1. In Step S204, during the second period, the clock recovery circuit 130 generates the phase selection signal P1 according to the phase-offset parameter generated in the first period and the phase shift of the digital input signal A1, such that the multi-phase clock generating circuit 120 determines the phase of the sampling clock CLK according to the phase selection signal P1. Accordingly, by estimating the phase-offset parameter in the first period, the clock recovery apparatus 10 may automatically adjust the phase of the sampling clock CLK by using the phase-offset parameter in the second period. Thus, even in an operating environment where the phase-offset between the receiving and transmitting ends is large, the clock recovery apparatus 10 is still able to recover the phase of the sampling clock CLK to a state close to the phase of the clock signal of the transmitting end.

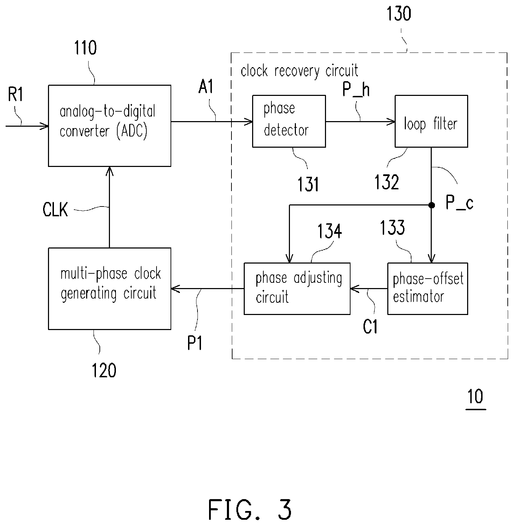

FIG. 3 is a block diagram illustrating the clock recovery apparatus 10 according to an embodiment of the invention. Referring to FIG. 3, the clock recovery circuit 130 shown in FIG. 3 further includes a phase detector 131, a loop filter 132, a phase-offset estimator 133, and a phase adjusting circuit 134. The phase detector 131 is coupled to the analog-to-digital converter 110, and receives the digital input signal A1 and performs phase detection on the digital input signal A1 to generate a phase indication signal P_h to indicate the phase shift of the digital input signal A1. Simply put, when the phase detector 131 receives the digital input signal A1, the phase detector 131 may detect the phase shift of the digital input signal A1 by various algorithms to generate the phase indication signal P_h, so as to indicate the phase difference between the sampling clock CLK and the working clock of the transmitting end of the analog input signal R1. For example, the phase detector 131 may estimate the phase shift of the digital input signal A1 by using a maximum likelihood algorithm or a minimum mean square error (MMSE) algorithm. Nevertheless, the invention is not limited thereto.

The loop filter 132 is coupled to the phase detector 131 and filters the phase indication signal P_h to generate a phase control signal P_c. The loop filter 132 may be implemented by a proportional integral filter, for example. Nevertheless, the invention is not limited thereto.

The phase-offset estimator 133 is coupled to the loop filter 132 and estimates the phase-offset parameter and a phase adjustment direction in the first period by counting the number of pulses of the phase control signal P_c in an estimation window. The phase adjusting circuit 134 is coupled to the loop filter 132 and the phase-offset estimator 133, and generates the phase selection signal P1 according to the phase control signal P_c in the first period. That is, during the first period, the phase adjusting circuit 134 may control the phase selection signal P1 to form a pulse according to the output of the loop filter 132, and the multi-phase clock generating circuit 120 may advance or retard the sampling clock CLK by one phase in response to the pulse.

During the second period, the phase-offset estimator 133 generates an automatic adjustment signal C1 according to the phase-offset parameter and the phase adjustment direction, and the phase adjusting circuit 134 generates the phase selection signal according to the automatic adjustment signal C1 and the phase control signal P_c in the second period. Specifically, the phase adjusting circuit 134 may control the phase selection signal P1 according to the output signals (i.e. the phase control signal P_c and the automatic adjustment signal C1) of the loop filter 132 and the phase-offset estimator 133 to form the pulse, and the multi-phase clock generating circuit 120 may advance or retard the sampling clock CLK by one phase in response to the pulse.

It should be noted that, during the second period, the phase-offset estimator 133 may continue counting the number of pulses of the phase control signal P_c in the estimation window, so as to correct the phase-offset parameter estimated in the first period. In addition, the window length of the estimation window used by the loop filter 132 in the first period is different from the window length of the estimation window used in the second period, and the window length of the estimation window used by the loop filter 132 in the second period is longer. In an embodiment, the loop filter 132 in the second period may be implemented by an infinite impulse response filter (IIR), for example. Nevertheless, the invention is not limited thereto.

In an embodiment of the invention, the phase-offset estimator 133 may include a numerically controlled oscillator (NCO) established based on the phase-offset parameter, so as to timely control the automatic adjustment signal C1 to form the pulse according to the phase-offset parameter. An embodiment is described in detail below as an example.

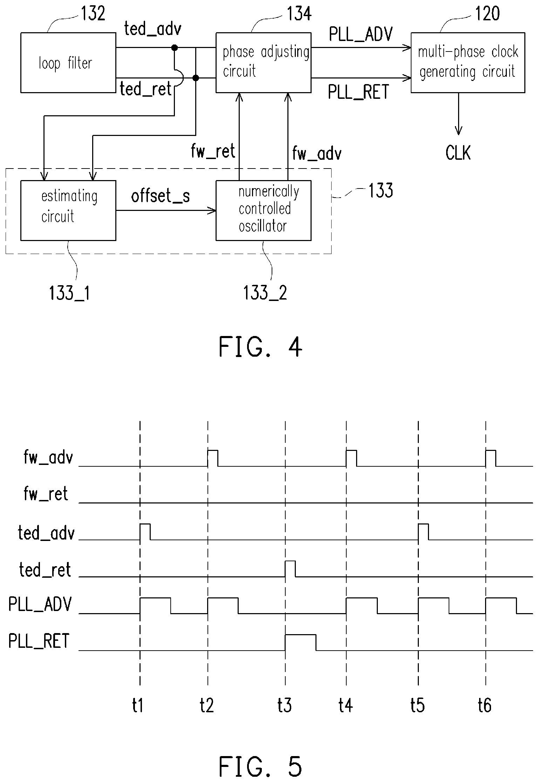

FIG. 4 is a block diagram illustrating the clock recovery circuit 130 according to an embodiment of the invention. It should be noted that, in this embodiment, the phase control signal P_c includes a phase advanced control signal ted_adv and a phase retarded control signal ted_ret; the phase selection signal P1 includes an advanced control signal PLL_ADV and a retarded control signal PLL_RET; and the automatic control signal C1 includes an estimation advanced control signal fw_adv and an estimation retarded control signal fw_ret. In an embodiment, the multi-phase clock generating circuit 120 advances the sampling clock CLK by one phase in response to the pulse of the advanced control signal PLL_ADV or retards the sampling clock CLK by one phase in response to the pulse of the retarded control signal PLL_RET.

In this embodiment, the phase adjusting circuit 134 generates the advanced control signal PLL_ADV according to the phase advanced control signal ted_adv and the estimation advanced control signal fw_adv, and the phase adjusting circuit 134 generates the retarded control signal PLL_RET according to the phase retarded control signal ted_ret and the estimation retarded control signal fw_ret.

The phase-offset estimator 133 includes an estimating circuit 133_1 and a numerically controlled oscillator 133_2. The estimating circuit 133_1 receives the phase advanced control signal ted_adv and the phase retarded control signal ted_ret and estimates a phase-offset parameter offset_s according to the phase advanced control signal ted_adv and the phase retarded control signal ted_ret. The numerically controlled oscillator 133 2 obtains the phase-offset parameter offset s from the estimating circuit 133_1 and accumulates the phase-offset parameter offset_s to obtain an accumulated result. When the accumulated result is greater than a predetermined phase difference, the numerically controlled oscillator 133_2 controls the estimation advanced control signal fw_adv and the estimation retarded control signal fw_ret to form a pulse according to the phase adjustment direction.

In this embodiment, the estimating circuit 133_1 counts a pulse number adv_cnt of the phase advanced control signal ted_adv and a pulse number ret_cnt of the phase retarded control signal ted_ret in the estimation window (assumed to be N clocks). Then, the estimating circuit 133_1 compares the pulse numbers of the two signals to determine the phase adjustment direction. Specifically, the estimating circuit 133_1 may subtract the pulse number ret_cnt from the pulse number adv_cnt to obtain a pulse number difference M and determine the phase adjustment direction based on whether the pulse number difference M is positive or negative. Moreover, assuming that the multi-phase clock generating circuit 120 may provide 128 phase options, the phase-offset parameter offset_s may be obtained by the following Equation (1).

$$\text{offset\_s} = \frac{\frac{|M|}{128}}{N} \qquad (1)$$

For example, assuming that a length N of the estimation window is $2^{16}$ clock cycles ($N=2^{16}$) and the pulse number adv_cnt counted by the estimating circuit 133_1 in the estimation window is equal to 1000 and the pulse number ret_cnt is equal to 300, the pulse number difference M is equal to 700 (M=1000-300=700). The pulse number difference M is greater than 0, and accordingly the estimating circuit 133_1 determines that the phase adjustment direction is to advance. According to the Equation (1), the phase-offset parameter offset_s at the moment is equal to 83.45ppm. The decimal place accuracy may be designed according to the actual requirements. Thus, the numerically controlled oscillator 133_2 may control the estimation advanced control signal fw_adv or the estimation retarded control signal fw_ret to form the pulse according to the phase-offset parameter offset_s and the phase adjustment direction.

FIG. 5 is a signal timing diagram of the clock recovery circuit according to an embodiment of the invention. Referring to FIG. 4 and FIG. 5, at a time point t1, the loop filter 132 detects that the phase of the sampling clock CLK requires adjustment according to the phase indication signal P_h, in which the phase indication signal P_h is for indicating the phase shift of the digital input signal A1. Therefore, the loop filter 132 controls the phase advanced control signal ted_adv to form a pulse, and at the same time, the phase adjusting circuit 134 controls the advanced control signal PLL_ADV to form a pulse at the time point t1 in response to the pulse of the phase advanced control signal ted_adv. Therefore, the multi-phase clock generating circuit 120 advances the sampling clock CLK by one phase in response to the pulse of the advanced control signal PLL_ADV at the time point t1.

At a time point t2, the numerically controlled oscillator 133_2 controls the estimation advanced control signal fw_adv according to the phase-offset parameter offset_s to form a pulse, and at the same time, the phase adjusting circuit 134 controls the advanced control signal PLL_ADV to form a pulse at the time point t2 in response to the pulse of the estimation advanced control signal fw_adv. Therefore, the multi-phase clock generating circuit 120 advances the sampling clock CLK by one phase in response to the pulse of the advanced control signal PLL ADV at the time point t2.

At a time point t3, the loop filter 132 detects that the phase of the sampling clock CLK requires adjustment according to the phase indication signal P_h. Therefore, the loop filter 132 controls the phase retarded control signal ted_ret to form a pulse, and at the same time, the phase adjusting circuit 134 controls the retarded control signal PLL_RET to form a pulse at the time point t3 in response to the pulse of the phase retarded control signal ted_ret. Thus, the multi-phase clock generating circuit 120 retards the sampling clock CLK by one phase in response to the pulse of the retarded control signal PLL_RET at the time point t3.

Similarly, at time points t4 and t6, the numerically controlled oscillator 133_2 controls the estimation advanced control signal fw_adv to form a pulse according to the phase-offset parameter offset_s, and at the same time, the phase adjusting circuit 134 controls the advanced control signal PLL_ADV to form pulses at the time points t4 and t6 in response to the pulse of the estimation advanced control signal fw_adv. Thus, the multi-phase clock generating circuit 120 advances the sampling clock CLK by one phase in response to the pulses of the advanced control signal PLL_ADV at the time points t4 and t6. At a time point t5, the loop filter 132 detects that the phase of the sampling clock CLK requires adjustment according to the phase indication signal P_h. Therefore, the loop filter 132 controls the phase advanced control signal ted_adv to form a pulse, and at the same time, the phase adjusting circuit 134 controls the advanced control signal PLL_ADV to form a pulse at the time point t5 in response to the pulse of the phase advanced control signal ted_adv. Thus, the multi-phase clock generating circuit 120 advances the sampling clock CLK by one phase in response to the pulse of the advanced control signal PLL_ADV at the time point t5.

Based on the above, it is known that the pulses on the estimation advanced control signal fw_adv and the estimation retarded control signal fw_ret are formed automatically according to the phase-offset parameter while the phase advanced control signal ted_adv and the phase retarded control signal ted_ret are generated by instant detection of the phase detector 131 and the loop filter 132. However, all the estimation advanced control signal fw adv, estimation retarded control signal fw ret, phase advanced control signal ted_adv, and phase retarded control signal ted_ret may control the advanced control signal PLL_ADV and the retarded control signal PLL_RET to form pulses, so as to change the phase of the sampling clock CLK.

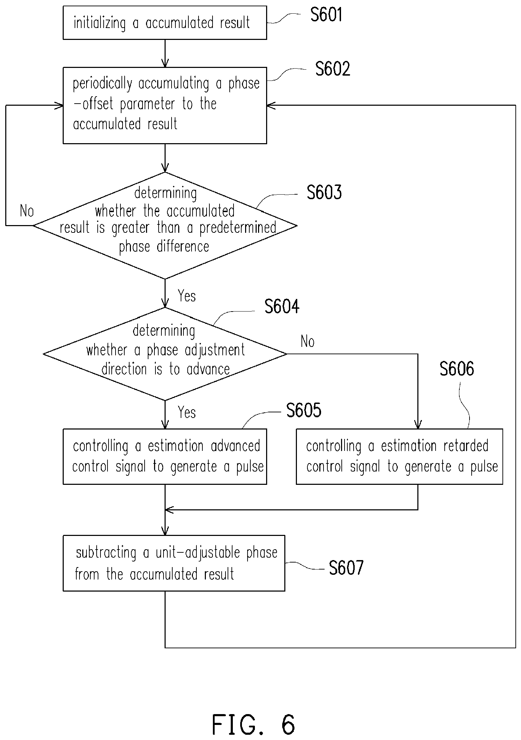

An embodiment is provided below to describe in detail how the numerically controlled oscillator 133_2 generates the estimation advanced control signal fw_adv and the estimation retarded control signal fw_ret of the automatic adjustment signal C1 according to the phase-offset parameter offset_s. FIG. 6 is a flowchart illustrating the numerically controlled oscillator generating the automatic adjustment signal according to an embodiment of the invention.

Referring to FIG. 6, in Step S601, the numerically controlled oscillator 133_2 initializes the accumulated result. In other words, the numerically controlled oscillator 133 2 resets the accumulated result to 0. In Step S602, the numerically controlled oscillator 133_2 periodically accumulates the phase-offset parameter offset_s to the accumulated result. Specifically, the numerically controlled oscillator 133_2 accumulates one phase-offset parameter offset_s to the accumulated result in each clock cycle in response to the clock signal (i.e. the sampling clock CLK in this embodiment). In Step S603, the numerically controlled oscillator 133_2 determines whether the accumulated result is greater than the predetermined phase difference. If the result of Step S603 is No, the numerically controlled oscillator 133_2 continues accumulating the phase-offset parameter offset_s.

If the result of Step S603 is Yes, in Step S604, the numerically controlled oscillator 133_2 determines whether the phase adjustment direction is to advance. If the result of Step S604 is Yes, in Step S605, the numerically controlled oscillator 133_2 controls the estimation advanced control signal fw_adv to generate a pulse. If the result of Step S604 is No, in Step S606, the numerically controlled oscillator 133_2 controls the estimation retarded control signal fw_ret to generate a pulse. In Step S607, the numerically controlled oscillator 133_2 subtracts a unit-adjustable phase from the accumulated result and returns to Step S602. The unit-adjustable phase is determined by the number of phases that the multi-phase clock generating circuit 120 can provide. Take the multi-phase clock generating circuit 120 that has 128 phases for example, the unit-adjustable phase is 1/128(Ts).

In conclusion, by additionally disposing the phase-offset estimator, the clock recovery circuit of the invention is able to count the number of times that the output phase of the sampling clock is adjusted based on the phase difference detection result in the first period, so as to estimate the phase-offset parameter. In the second period, the phase-offset estimator may establish the numerically controlled oscillator by using the phase-offset parameter, so as to control the multi-phase clock generating circuit to automatically adjust the phase of the sampling clock. Overall, the clock recovery apparatus of the invention coordinates the phase-offset estimator and the existing phase difference detecting circuit to accurately lock the oscillating clocks of the receiving end and further improve the performance of the Ethernet physical layer in long-term transmission or the operating environment of greater phase offset.

**Claims**

1. A clock recovery apparatus (10), comprising:

    an analog-to-digital converter (110) configured to sample an analog input signal (R1) by using a sampling clock (CLK) to output a digital input signal (A1);
    a multi-phase clock generating circuit (120) coupled to the analog-to-digital converter (110) and configured to output the sampling clock (CLK) to the analog-to-digital converter (110) and to control a phase of the sampling clock (CLK) according to a phase selection signal (P1); and
    a clock recovery circuit (130) coupled to the analog-to-digital converter (110) and the multi-phase clock generating circuit (120) and configured to receive the digital input signal (A1), wherein the clock recovery circuit (130) is configured to output the phase selection signal (P1) to the multi-phase clock generating circuit (120), wherein in a first period, the clock recovery circuit (130) is configured to detect a phase shift of the digital input signal (A1) to generate the phase selection signal (P1) and is further configure to estimate a phase-offset parameter by detecting the phase shift of the digital input signal (A1) generating a phase control signal (P_c) and counting a pulse number of the phase control signal (P_c), and
    in a second period after the first period, the clock recovery circuit (130) is configured to generate the phase selection signal (P1) according to the phase-offset parameter generated in the first period and the phase shift of the digital input signal (A1).

**2.** The clock recovery apparatus according to claim 1, wherein the clock recovery circuit (130) comprises:

a phase detector (131) coupled to the analog-to-digital converter (110) and performing phase detection on the digital input signal (A1) to generate a phase indication signal (P_h) indicating the phase shift of the digital input signal (A1); a loop filter (132) coupled to the phase detector (131) and filtering the phase indication signal (P_h) to generate the phase control signal (P_c); a phase-offset estimator (133) coupled to the loop filter (132) and estimating the phase-offset parameter and a phase adjustment direction in the first period by counting the pulse number of the phase control signal (P_c) in an estimation window; and a phase adjusting circuit (134) coupled to the loop filter (132) and the phase-offset estimator (133) and outputting the phase selection signal (P1).

**3.** The clock recovery apparatus according to claim 1 or 2, wherein the phase-offset estimator (134) generates an automatic adjustment signal (C1) in the second period according to the phase-offset parameter and the phase adjustment direction, and the phase adjusting circuit (134) generates the phase selection signal (P1) in the second period according to the automatic adjustment signal (C1) and the phase control signal (P_c).

**4.** The clock recovery apparatus according to claim 2 or 3, wherein the phase-offset estimator (133) comprises a numerically controlled oscillator (133_2) established based on the phase-offset parameter, and the numerically controlled oscillator (133_2) initializes an accumulated result and periodically accumulates the phase-offset parameter to the accumulated result, and when the accumulated result is greater than a predetermined phase difference, the numerically controlled oscillator (133_2) controls the automatic adjustment signal (C1) to provide a pulse according to the phase adjustment direction.

**5.** The clock recovery apparatus according to any of the claims 2 to 4, wherein the phase adjusting circuit (134) generates the phase selection signal (P1) according to the phase control signal (P_c) in the first period.

**6.** The clock recovery apparatus according to any of the claims 2 to 5, wherein the multi-phase clock generating circuit (120) generates a plurality of clock signals and selects one of the clock signals as the sampling clock (CLK) according to the phase selection signal (PI), wherein the clock signals are provided with the same frequency and different phases.

**7.** A clock recovery method, comprising:

receiving (S201) an analog input signal (R1) and sampling the analog input signal (R1) according to a sampling clock (CLK) to generate a digital input signal (A1); in a first period, detecting (S202) a phase shift of the digital input signal (A1) to generate a phase selection signal (P1) and determining a phase of the sampling clock (CLK) according to the phase selection signal (P1); in the first period, estimating (S203) a phase-offset parameter by detecting the phase shift of the digital input signal (A1) generating a phase control signal (P_c) and counting a pulse number of the phase control signal (P_c); and in a second period after the first period, generating (S204) the phase selection signal (P1) according to the phase-offset parameter generated in the first period and the phase shift of the digital input signal (A1).

**8.** The clock recovery method according to claim 7, further comprising:
in the second period, correcting the phase-offset parameter according to the digital input signal (A1), and generating the phase selection signal (P1) according to the corrected phase-offset parameter and the phase shift of the digital input signal (A1).

**9.** The clock recovery method according to claim 7 or 8, wherein the step of generating the phase selection signal (P1) according to the phase shift of the digital input signal (A1) in the first period comprises:

performing phase detection on the digital input signal (A1) to generate a phase indication signal (P_h) indicating the phase shift of the digital input signal; filtering the phase indication signal (P_h) to generate the phase control signal (P_c); and outputting the phase selection signal (P1) according to the phase control signal (P_c) to determine the phase of the sampling clock (CLK).

**10.** The clock recovery method according to claim 9, wherein the step of estimating the phase-offset parameter according to the digital input signal (A1) and the sampling clock (CLK) in the first period comprises:
estimating the phase-offset parameter and a phase adjustment direction in the first period by counting the pulse number of the phase control signal (P_c) in an estimation window.

**11.** The clock recovery method according to claim 9 or 10, wherein the step of generating the phase selection signal (P1) according to the phase-offset parameter and the phase shift of the digital input signal (A1) in the second period comprises:

generating an automatic adjustment signal (C1) in the second period according to the phase-offset parameter and the phase adjustment direction and generating the phase selection signal (P1) according to the automatic adjustment signal (C1) and the phase control signal (P_c).

12. The clock recovery method according to claim 11, wherein the step of generating the automatic adjustment signal (C1) in the second period according to the phase-offset parameter and the phase adjustment direction, and generating the phase selection signal (P1) according to the automatic adjustment signal (C1) and the phase control signal (P_c) comprises:

in the second period, initializing an accumulated result and periodically accumulating the phase-offset parameter to the accumulated result by a numerically controlled oscillator (133_2); controlling the automatic adjustment signal (C1) to form a pulse according to the phase adjustment direction by the numerically controlled oscillator (133_2) when the accumulated result is greater than a predetermined phase difference; and in the second period, controlling the automatic adjustment signal (C1) to form the pulse in response to the pulse of the phase control signal (P_c).

13. The clock recovery method according to any of the claims 9 to 12, wherein the step of determining the phase of the sampling clock (CLK) according to the phase selection signal (P1) comprises:

generating a plurality of clock signals, wherein the clock signals comprise the same frequency and different phases; and in the first period and the second period, selecting one of the clock signals as the sampling clock (CLK) according to the phase selection signal (P1).

**Patentansprüche**

1. Taktwiederherstellungsvorrichtung(10), umfassend:

einen Analog-Digital-Wandler (110), der konfiguriert ist, um ein analoges Eingangssignal (R1) abzutasten, indem er einen Abtasttakt (CLK) verwendet, um ein digitales Eingangssignal (A1) auszugeben; eine mehrphasige Takterzeugungsschaltung (120), die mit dem Analog-Digital-Wandler (110) gekoppelt ist und konfiguriert ist, um den Abtasttakt (CLK) an den Analog-Digital-Wandler (110) auszugeben und eine Phase des Abtasttaktes (CLK) gemäß einem Phasenauswahlsignal (P1) zu steuern; und

eine Taktwiederherstellungsschaltung (130), die mit dem Analog-Digital-Wandler (110) und der mehrphasigen Takterzeugungsschaltung (120) gekoppelt ist und konfiguriert ist, um das digitale Eingangssignal (A1) zu empfangen, wobei die Taktwiederherstellungsschaltung (130) konfiguriert ist, um das Phasenauswahlsignal (P1) an die mehrphasige Takterzeugungsschaltung (120) auszugeben, wobei in einer ersten Periode, die Taktwiederherstellungsschaltung (130) konfiguriert ist, um eine Phasenverschiebung des digitalen Eingangssignals (A) zu erfassen, um das Phasenauswahlsignal (P1) zu erzeugen, und ferner konfiguriert ist, um einen Phasenversatzparameter zu schätzen, indem die Phasenverschiebung des digitalen Eingangssignals (A1) erfasst wird, das ein Phasenkontrollsignal (P_c) erzeugt und eine Pulszahl des Phasenkontrollsignals (P_c) zählt, und in einer zweiten Periode nach der ersten Periode ist die Taktwiederherstellungsschaltung (130) konfiguriert, um das Phasenauswahlsignal (P1) gemäß dem in der ersten Periode erzeugten Phasenversatzparameter und der Phasenverschiebung des digitalen Eingangssignals (A1) zu erzeugen.

2. Die Taktwiederherstellungsvorrichtung nach Anspruch 1, wobei die Taktwiederherstellungsschaltung (130) umfasst:

einen Phasendetektor (131), der mit dem Analog-Digital-Wandler (110) gekoppelt ist und eine Phasendetektion des digitalen Eingangssignals (A1) durchführt, um ein Phasenanzeigesignal (P_h) zu erzeugen, das die Phasenverschiebung des digitalen Eingangssignals (A1) anzeigt; einen Schleifenfilter (132), der mit dem Phasendetektor (131) gekoppelt ist und das Phasenanzeigesignal (P_h) filtert, um das Phasenkontrollsignal (P_c) zu erzeugen; einen Phasenversatzschätzer (133), der mit dem Schleifenfilter (132) gekoppelt ist und den Phasenversatzparameter und eine Phasenanpassungsrichtung in der ersten Periode durch Zählen der Pulszahl des Phasenkontrollsignals (P_c) in einem Schätzfenster schätzt; und eine Phaseneinstellschaltung (134), die mit dem Schleifenfilter (132) und dem Phasenversatzschätzer (133) gekoppelt ist und das Phasenauswahlsignal (P1) ausgibt.

3. Die Taktwiederherstellungsvorrichtung nach Anspruch 1 oder 2, wobei der Phasenversatzschätzer (134) in der zweiten Periode gemäß dem Phasenversatzparameter und der Phasenanpassungsrichtung ein automatisches Einstellsignal (C1) erzeugt und die Phaseneinstellschaltung (134) das Phasenauswahlsignal (P1) in der zweiten Periode gemäß dem automatischen Einstellsignal (C1) und dem Phasenkontrollsignal (P_c) erzeugt.

4. Die Taktwiederherstellungsvorrichtung nach Anspruch 2 oder 3, wobei der Phasenversatzschätzer (133) einen numerisch gesteuerten Oszillator (133_2) umfasst, der basierend auf dem Phasenversatzparameter eingerichtet wurde, und der numerisch gesteuerte Oszillator (133_2) ein akkumuliertes Ergebnis initialisiert und den Phasenversatzparameter periodisch auf das akkumulierte Ergebnis summiert, und wenn das akkumulierte Ergebnis größer als eine vorbestimmte Phasendifferenz ist, steuert der numerisch gesteuerte Oszillator (133_2) das automatische Einstellsignal (C1), um einen Impuls gemäß der Phaseneinstellungsrichtung bereitzustellen.

5. Die Taktwiederherstellungsvorrichtung nach einem der Ansprüche 2 bis 4, wobei die Phaseneinstellschaltung (134) das Phasenauswahlsignal (P1) gemäß dem Phasenkontrollsignal (P_c) in der ersten Periode erzeugt.

6. Die Taktwiederherstellungsvorrichtung nach einem der Ansprüche 2 bis 5, wobei die mehrphasige Takterzeugungsschaltung (120) eine Vielzahl von Taktsignalen erzeugt und eines der Taktsignale als Abtasttakt (CLK) gemäß dem Phasenauswahlsignal (P1) auswählt, wobei die Taktsignale mit der gleichen Frequenz und unterschiedlichen Phasen versehen sind.

7. Das Taktwiederherstellungsverfahren, umfassend: Empfangen (S201) eines analogen Eingangssignals (R1) und Abtasten des analogen Eingangssignals (R1) gemäß einem Abtasttakt (CLK) zum Erzeugen eines digitalen Eingangssignals (A1); Erfassen (S202) einer Phasenverschiebung des digitalen Eingangssignals (A1) zum Erzeugen eines Phasenauswahlsignals (P1) und Bestimmen einer Phase des Abtasttaktes (CLK) gemäß dem Phasenauswahlsignal (P1) in einer ersten Periode; Schätzen (S203) eines Phasenversatzparameters durch Erfassen der Phasenverschiebung des digitalen Eingangssignals (A1), das ein Phasenkontrollsignal (P_c) erzeugt und eine Impulszahl des Phasenkontrollsignals (P_c) zählt; und in einer zweiten Periode nach der ersten Periode Erzeugen (S204) des Phasenauswahlsignals (P1) gemäß dem in der ersten Periode erzeugten Phasenversatzparameter und der Phasenverschiebung des digitalen Eingangssignals (A1).

8. Das Taktwiederherstellungsverfahren nach Anspruch 7, ferner umfassend: in der zweiten Periode, Korrigieren des Phasenversatzparameters gemäß dem digitalen Eingangssignal (A1) und Erzeugen des Phasenauswahlsignals (P1) gemäß dem korrigierten Phasenversatzparameter und der Phasenverschiebung des digitalen Eingangssignals (A1).

9. Das Taktwiederherstellungsverfahren nach Anspruch 7 oder 8, wobei der Schritt des Erzeugens des Phasenauswahlsignals (P1) gemäß der Phasenverschiebung des digitalen Eingangssignals (A1) in der ersten Periode umfasst:

Durchführen einer Phasendetektion des digitalen Eingangssignals (A1) zum Erzeugen eines Phasenanzeigesignals (P_h), das die Phasenverschiebung des digitalen Eingangssignals anzeigt;
Filtern des Phasenanzeigesignals (P_h) zum Erzeugen des Phasenkontrollsignals (P_c); und Ausgeben des Phasenauswahlsignals (P1) gemäß dem Phasenkontrollsignal (P_c) zum Bestimmen der Phase des Abtasttaktes (CLK).

10. Das Taktwiederherstellungsverfahren nach Anspruch 9, wobei der Schritt des Schätzens des Phasenversatzparameters gemäß dem digitalen Eingangssignal (A1) und dem Abtasttakt (CLK) in der ersten Periode umfasst:
Schätzen des Phasenversatzparameters und einer Phasenanpassungsrichtung in der ersten Periode durch Zählen der Impulszahl des Phasenkontrollsignals (P_c) in einem Schätzfenster.

11. Das Taktwiederherstellungsverfahren nach Anspruch 9 oder 10, wobei der Schritt des Erzeugens des Phasenauswahlsignals (P1) gemäß dem Phasenversatzparameter und der Phasenverschiebung des digitalen Eingangssignals (A1) in der zweiten Periode umfasst: Erzeugen eines automatischen Einstellsignals (C1) in der zweiten Periode gemäß dem Phasenversatzparameter und der Phasenanpassungsrichtung und Erzeugen des Phasenauswahlsignals (P1) gemäß dem automatischen Einstellsignal (C1) und dem Phasenkontrollsignal (P_c).

12. Das Taktwiederherstellungsverfahren nach Anspruch 11, wobei der Schritt des Erzeugens des automatischen Einstellsignals (C1) in der zweiten Periode gemäß dem Phasenversatzparameter und der Phasenanpassungsrichtung und des Erzeugens des Phasenauswahlsignals (P1) gemäß dem automatischen Einstellsignal (C1) und dem Phasenkontrollsignal (P_c) umfasst: in der zweiten Periode Initialisieren eines akkumulierten Ergebnisses und periodisches Akkumulieren des Phasenversatzparameters auf das akkumulierte Ergebnis durch einen numerisch gesteuerten Oszillator (133_2); Steuern des automatischen Einstellsignals (C1) zum Bilden eines Impulses gemäß der Phasen-Einstellrichtung durch den numerisch gesteuerten Oszillator (133_2), wenn das akkumulierte Ergebnis größer als eine vorgegebene Phasendifferenz ist; und in der zweiten Periode Steuern des automatischen Einstellsignals (C1) zum Bilden des Impulses als Reaktion auf den Impuls des Phasenkontrollsignals (P_c).

13. Das Taktwiederherstellungsverfahren nach einem der Ansprüche 9 bis 12, wobei der Schritt des Bestimmens der Phase des Abtasttaktes (CLK) gemäß dem Phasenauswahlsignal (P1) umfasst: Erzeugen einer Vielzahl von Taktsignalen, wobei die Taktsignale die gleiche Frequenz und verschiedene Phasen umfassen; und in der ersten Periode und der zweiten Periode Auswählen eines der Taktsignale als Abtasttakt (CLK) gemäß dem Phasenauswahlsignal (P1).

**Revendications**

1. Appareil de récupération d'horloge (10), comprenant :

    un convertisseur analogique-numérique (110) configuré pour échantillonner un signal d'entrée analogique (R1) à l'aide d'une horloge d'échantillonnage (CLK) pour délivrer un signal d'entrée numérique (A1) ;
    un circuit de génération d'horloge multi-phase (120) couplé au convertisseur analogique-numérique (110) et configuré pour délivrer l'horloge d'échantillonnage (CLK) au convertisseur analogique-numérique (110) et pour commander une phase de l'horloge d'échantillonnage (CLK) selon un signal de sélection de phase (P1) ; et
    un circuit de récupération d'horloge (130) couplé au convertisseur analogique-numérique (110) et au circuit de génération d'horloge multi-phase (120) et configuré pour recevoir le signal d'entrée numérique (A1), dans lequel le circuit de récupération d'horloge (130) est configuré pour délivrer le signal de sélection de phase (P1) au circuit de génération d'horloge multi-phase (120), dans lequel, dans une première période, le circuit de récupération d'horloge (130) est configuré pour détecter un déphasage du signal d'entrée numérique (A1) pour générer le signal de sélection de phase (P1) et est en outre configuré pour estimer un paramètre de décalage de phase par détection du déphasage du signal d'entrée numérique (A1), génération d'un signal de commande de phase (P_c) et comptage d'un nombre d'impulsions du signal de commande de phase (P_c), et dans une seconde période après la première période, le circuit de récupération d'horloge (130) est configuré pour générer le signal de sélection de phase (P1) selon le paramètre de décalage de phase généré dans la première période et le déphasage du signal d'entrée numérique (A1).

2. Appareil de récupération d'horloge selon la revendication 1, dans lequel le circuit de récupération d'horloge (130) comprend :

    un détecteur de phase (131) couplé au convertisseur analogique-numérique (110) et réalisant une détection de phase sur le signal d'entrée numérique (A1) pour générer un signal d'indication de phase (P_h) indiquant le déphasage du signal d'entrée numérique (A1) ;
    un filtre à boucle (132) couplé au détecteur de phase (131) et filtrant le signal d'indication de phase (P_h) pour générer le signal de commande de phase (P_c) ;
    un estimateur de décalage de phase (133) couplé au filtre à boucle (132) et estimant le paramètre de décalage de phase et une direction de réglage de phase dans la première période par comptage du nombre d'impulsions du signal de commande de phase (P_c) dans une fenêtre d'estimation ; et
    un circuit de réglage de phase (134) couplé au filtre à boucle (132) et à l'estimateur de décalage de phase (133) et délivrant le signal de sélection de phase (P1) .

3. Appareil de récupération d'horloge selon la revendication 1 ou 2, dans lequel l'estimateur de décalage de phase (134) génère un signal de réglage automatique (C1) dans la seconde période selon le paramètre de décalage de phase et la direction de réglage de phase, et le circuit de réglage de phase (134) génère le signal de sélection de phase (P1) dans la seconde période selon le signal de réglage automatique (C1) et le signal de commande de phase (P_c) .

4. Appareil de récupération d'horloge selon la revendication 2 ou 3, dans lequel l'estimateur de décalage de phase (133) comprend un oscillateur commandé numériquement (133_2) établi sur la base du paramètre de décalage de phase, et l'oscillateur commandé numériquement (133_2) initialise un résultat accumulé et accumule de façon périodique le paramètre de décalage de phase dans le résultat accumulé, et lorsque le résultat accumulé est supérieur à une différence de phase prédéterminée, l'oscillateur commandé numériquement (133_2) commande le signal de réglage automatique (C1) pour fournir une impulsion selon la direction de réglage de phase.

**5.** Appareil de récupération d'horloge selon l'une quelconque des revendications 2 à 4, dans lequel le circuit de réglage de phase (134) génère le signal de sélection de phase (P1) selon le signal de commande de phase (P_c) dans la première période.

**6.** Appareil de récupération d'horloge selon l'une quelconque des revendications 2 à 5, dans lequel le circuit de génération d'horloge multi-phase (120) génère une pluralité de signaux d'horloge et sélectionne l'un des signaux d'horloge en tant qu'horloge d'échantillonnage (CLK) selon le signal de détection de phase (P1), dans lequel les signaux d'horloge sont pourvus de la même fréquence et de phases différentes.

**7.** Procédé de récupération d'horloge, comprenant :

recevoir (S201) un signal d'entrée analogique (R1) et échantillonner le signal d'entrée analogique (R1) selon une horloge d'échantillonnage (CLK) pour générer un signal d'entrée numérique (A1) ;
dans une première période, détecter (S202) un déphasage du signal d'entrée numérique (A1) pour générer un signal de sélection de phase (P1) et déterminer une phase de l'horloge d'échantillonnage (CLK) selon le signal de sélection de phase (P1) ;
dans la première période, estimer (S203) un paramètre de décalage de phase par détection du déphasage du signal d'entrée numérique (A1), génération d'un signal de commande de phase (P_c) et comptage d'un nombre d'impulsions du signal de commande de phase (P_c) ; et
dans une seconde période après la première période, générer (S204) le signal de sélection de phase (P1) selon le paramètre de décalage de phase généré dans la première période et le déphasage du signal d'entrée numérique (A1).

**8.** Procédé de récupération d'horloge selon la revendication 7, comprenant en outre :
dans la seconde période, corriger le paramètre de décalage de phase selon le signal d'entrée numérique (A1), et générer le signal de sélection de phase (P1) selon le paramètre de décalage de phase corrigé et le déphasage du signal d'entrée numérique (A1).

**9.** Procédé de récupération d'horloge selon la revendication 7 ou 8, dans lequel l'étape de génération du signal de sélection de phase (P1) selon le déphasage du signal d'entrée numérique (A1) dans la première période comprend :

réaliser une détection de phase sur le signal d'entrée numérique (A1) pour générer un signal d'indication de phase (P_h) indiquant le déphasage du signal d'entrée numérique ;
filtrer le signal d'indication de phase (P_h) pour générer le signal de commande de phase (P_c) ; et
délivrer le signal de sélection de phase (P1) selon le signal de commande de phase (P_c) pour déterminer la phase de l'horloge échantillonnage (CLK).

**10.** Procédé de récupération d'horloge selon la revendication 9, dans lequel l'étape d'estimation du paramètre de décalage de phase selon le signal d'entrée numérique (A1) et l'horloge échantillonnage (CLK) dans la première période comprend :
estimer le paramètre de décalage de phase et une direction de réglage de phase dans la première période par comptage du nombre d'impulsions du signal de commande de phase (P_c) dans une fenêtre d'estimation.

**11.** Procédé de récupération d'horloge selon la revendication 9 ou 10, dans lequel l'étape de génération du signal de sélection de phase (P1) selon le paramètre de décalage de phase et le déphasage du signal d'entrée numérique (A1) dans la seconde période comprend :
générer un signal de réglage automatique (C1) dans la seconde période selon le paramètre de décalage de phase et la direction de réglage de phase et générer le signal de sélection de phase (P1) selon le signal de réglage automatique (C1) et le signal de commande de phase (P_c).

**12.** Procédé de récupération d'horloge selon la revendication 11, dans lequel l'étape de génération du signal de réglage automatique (C1) dans la seconde période selon le paramètre de décalage de phase et la direction de réglage de phase, et de génération du signal de sélection de phase (P1) selon le signal de réglage automatique (C1) et le signal de commande de phase (P_c) comprend :

dans la seconde période, initialiser un résultat accumulé et accumuler de façon périodique le paramètre de décalage de phase dans le résultat accumulé par un oscillateur commandé numériquement (133_2) ;
commander le signal de réglage automatique (C1) pour former une impulsion selon la direction de réglage de phase par l'oscillateur commandé numériquement (133_2) lorsque le résultat accumulé est supérieur à une différence de phase prédéterminée ; et
dans la seconde période commander le signal de réglage automatique (C1) pour former l'impulsion en réponse à l'impulsion du signal de commande de phase (P_c).

**13.** Procédé de récupération d'horloge selon l'une quelconque des revendications 9 à 12, dans lequel l'état de détermination de la phase de l'horloge échantillonnage (CLK) selon le signal de sélection de phase (P1) comprend :

générer une pluralité de signaux d'horloge, les signaux d'horloge comprenant la même fréquence et des phases différentes ; et
dans la première période et la seconde période, sélectionner l'un des signaux d'horloge en tant qu'horloge échantillonnage (CLK) selon le signal de sélection de phase (P1).

FIG. 1

receiving a analog input signal and sampling the
analog input signal according to a sampling clock
to generate a digital input signal ~S201

during a first period, detecting the phase shift of
the digital input signal to generate a phase
selection signal and controlling the phase of the
sampling clock according to the phase selection
signal ~S202

during a first period, estimating a phase-offset
parameter according to the digital input signal ~S203

during the second period, generating the phase
selection signal according to the phase-offset
parameter generated in the first period and the
phase shift of the digital input signal, so as to
control the phase of the sampling clock according
to the phase selection signal ~S204

FIG. 2

110

R1

analog-to-digital
converter (ADC)

A1

CLK

multi-phase clock
generating circuit

120

130

clock recovery circuit

P_h

phase
detector

loop filter

131

132

P_c

134

133

phase adjusting
circuit

phase-offset
estimator

P1

C1

10

FIG. 3

FIG. 4

FIG. 5

initializing a accumulated result —— S601

periodically accumulating a phase-offset parameter to the accumulated result —— S602

determining whether the accumulated result is greater than a predetermined phase difference —— S603

No

Yes

determining whether a phase adjustment direction is to advance —— S604

No

S606

Yes

controlling a estimation advanced control signal to generate a pulse —— S605

controlling a estimation retarded control signal to generate a pulse

subtracting a unit-adjustable phase from the accumulated result —— S607

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006140321 A1
- US 2005232383 A
- EP 1063809 A2
- US 2013169328 A
- US 2008310569 A1